# EUROPÄISCHE PATENTSCHRIFT

(11) **EP 2 664 939 B1**
(45) Veröffentlichungstag und Bekanntmachung des Hinweises auf die Patenterteilung: **01.05.2019**
(21) Anmeldenummer: 12168530.9
(22) Anmeldetag: 18.05.2012
(51) Int. Cl.: G01R 31/40, H02S 50/10, G01B 21/04

(54) **Verfahren zur Validierung sonnenstandsabhängiger Messwerte mehrerer Messkanäle**
Method for validating measurements of multiple measurement channels which depend on the position of the sun
Procédé de validation de valeurs de mesure en fonction de la position du soleil sur plusieurs canaux de mesure

(43) Veröffentlichungstag der Anmeldung: 20.11.2013
(73) Patentinhaber: Skytron Energy GmbH, 12489 Berlin (DE)
(72) Erfinder: Hoffmann, Hendrik, 15738 Zeuthen (DE)
(74) Vertreter: Hertin und Partner Rechts- und Patentanwälte PartG mbB

(56) Entgegenhaltungen:
- EP-A1- 2 293 089
- EP-A2- 0 677 749
- EP-A2- 2 317 329
- JP-A- 2005 340 464
- US-A1- 2012 084 027
- FIRTH S K ET AL: "A simple model of PV system performance and its use in fault detection", SOLAR ENERGY, PERGAMON PRESS. OXFORD, GB, Bd. 84, Nr. 4, 1. April 2010 (2010-04-01), Seiten 624-635, XP026946124, ISSN: 0038-092X, DOI: 10.1016/J.SOLENER.2009.08.004 [gefunden am 2010-02-25]

## Beschreibung

Die Erfindung betrifft ein Verfahren zur Validierung sonnenstandsabhängiger Messwerte mehrerer Messkanäle, insbesondere von Messwerten aus Photovoltaikanlagen.

Bei PV-Kraftwerken werden zur Zustandsüberwachung verschiedene Kenngrößen auf unterschiedlichen Ebenen gemessen, aufgezeichnet und bewertet. Zu diesen Größen zählen insbesondere der Strom bzw. die Leistung einzelner Stränge, die Leistung einzelner Zonen, was der Zusammenfassung von Strängen entspricht, die Leistung einzelner Wechselrichter, was der Zusammenfassung von Zonen oder Strängen entspricht, sowie der Leistung einzelner Kraftwerksblöcke, was der Zusammenfassung von Wechselrichtern entspricht.

Bei der Überwachung zeigt sich, dass es zu einer hohen Anzahl von Fehldetektionen kommen kann, da die Ursache einer Abweichung nicht immer in der getesteten Komponente selbst begründet ist. Als wesentliche Ursachen für Fehldetektionen können hier Signalschwankungen durch geplante Wartungen, Netzmanagement, Bewölkung und Teilverschattungen festgestellt werden. Geplante Wartungen und Netzmanagement können organisatorisch gelöst werden und werden hier nicht näher betrachtet. Die durch Bewölkung verursachten Schwankungen sind aufgrund ihres zeitlichen Verhaltens einfach durch Bewertung der Stetigkeit des Messsignals und Mittelung erkennbar und kompensierbar. Hier werden im Wesentlichen die Teilverschattungen betrachtet.

Teilverschattungen werden durch stationäre Objekte in der Umgebung der PV-Anlage verursacht, wie zum Beispiel Gebäude, Bäume, Windräder oder Hochspannungsmasten, und treten somit in regelmäßigen Intervallen auf. Die Teilverschattungen betreffen die einzelnen Elemente der Gruppe, wie zum Beispiel Stränge oder einzelne Module, jedoch zu unterschiedlichen Zeiten unterschiedlich stark.

Die Erkennung von Teilverschattungen und insbesondere ihre Unterscheidung von Fehlfunktionen ist komplex. Bislang existiert kein erfolgversprechender Ansatz.

EP 2 293 089 A1 offenbart eine Stringausfallüberwachung bei der die in den Strings geflossenen Ströme gemessen, mittels eines Referenzstroms normiert und dann analysiert werden. Die Analyse ist zeitlich normiert und findet nach Abschluss eines Tages statt.

US 2012/084027 A1 zeigt die Überwachung der Leistung eines PV Kraftwerks basierend auf Messdaten der Strings. Ausfall und Degradierung können besser erkannt werden durch die Verwendung von Überwachungsbedingungen, Leistungsgrenzwerten und Selbstkalibrierung.

EP 0 677 749 A2 offenbart das Erkennen einer Anomalie in einem PV Kraftwerk, bei dem elektrische Parameter der Strings gemessen und gegenseitig verglichen werden. Basierend auf dem Ergebnis des Vergleichs gibt eine Warneinheit bei einer Anomalie eine Warnung aus.

Der Erfindung liegt die Aufgabe zu Grunde, die Verarbeitung sonnenstandsabhängiger Messwerte zu verbessern.

Diese Aufgabe wird mit den Merkmalen des Anspruchs 1 bzw. 8 gelöst. Vorteilhafte Weiterbildungen der Erfindung sind in den abhängigen Ansprüchen definiert.

Gemäß einem ersten Aspekt der Erfindung umfasst ein Verfahren zur Validierung oder zur Verarbeitung sonnenstandsabhängiger Messwerte mehrerer Messkanäle die folgenden Schritte:
- Speichern zumindest von Maximalwerten von Messwerten der Messkanäle unter Berücksichtigung des zugehörigen Sonnenstands;
- Berechnen und Speichern von gespeicherten Verhältnissen, derart, dass für die Messwerte jedes Messkanals für jeden Sonnenstand das Verhältnis zu den Messwerten der anderen Messkanäle gebildet wird;
- Ermitteln eines erwarteten Verhältnisses durch Berechnung einer Häufigkeitsverteilung über alle gespeicherten Verhältnisse;
- Berechnen eines aktuellen Verhältnisses eines aktuell gemessenen Messwertes zu aktuellen Messwerten der anderen Messkanäle; und
- Validieren des aktuell gemessenen Messwertes:
- Wenn das erwartete Verhältnis dem gespeicherten Verhältnis entspricht und das gespeicherte Verhältnis dem aktuellen Verhältnis entspricht, so ist der aktuelle Messwert gültig und valid; und/oder
- Wenn das erwartete Verhältnis dem gespeicherten Verhältnis entspricht und das gespeicherte Verhältnis vom aktuellen Verhältnis abweicht, so liegt eine Störung vor; und/oder
- Wenn das erwartete Verhältnis vom gespeicherten Verhältnis abweicht, so wird die Validität für diesen Messwert nicht bewertet.

Eine Eigenschaft der sonnenstandsabhängigen Messwerte ist Ihre Proportionalität zur gegenwärtigen Sonneneinstrahlung, die Proportionalität kann beispielsweise ein fester, ermittelbarer Faktor oder eine komplexe Abhängigkeit sein. Diese Eigenschaft lässt sich nutzen, um mehrere gleichartige Messwerte verschiedener Messkanäle gegeneinander zu prüfen und so Fehler oder Komponentenausfälle zu detektieren und zu melden. Die Prüfung der Werte gegeneinander erspart den Vergleich mit einem Referenzsensor wie z.B. einem Einstrahlungssensor, was zu einer höheren Robustheit gegen Sensorausfälle, Kalibrierfehler, Ausrichtungsfehler, Kennlinienabweichungen usw. führt.

Das Verfahren kann auf weitere Annahmen zurückgreifen: Fehlfunktionen treten oftmals ab einem bestimmten Zeitpunkt dauerhaft auf oder liegen sporadisch und unregelmäßig vor. Sie betreffen ein einzelnes Element der Gruppe, meist immer in gleicher Weise. Weiterhin kann angenommen werden, dass jedes Bauteil wie ein Solarmodul so angeordnet ist, dass es während des überwiegenden Teils des Jahres unverschattet ist bzw. zumindest der maximale prozentuale Anteil von Verschattung angegeben werden kann.

Das Verfahren verwendet diese Eigenschaften, um mit seinem Algorithmus Fehldetektionen bzw. Fehlalarme zu unterdrücken. Dazu werden Verschattungen oder Teilverschattungen erkannt, nämlich wenn das erwartete Verhältnis vom gespeicherten Verhältnis abweicht. Dann kann ein von einem Steuer- oder Überwachungsrechner ausgeführtes Verfahren das einen Fehler erkennen würde, angewiesen oder beeinflusst werden, diesen Fehler zu unterdrücken. Dies verbessert den Betrieb zum Beispiel eines PV Kraftwerks erheblich, da eine Vielzahl von Fehlalarmen unterdrückt wird. Das Verfahren kann als Routine oder Komponente eines Kraftwerksteuer- und/oder Überwachungsprogramms ausgeführt sein.

Die Messwerte können in einer Matrix an der Position, die ihrem zugehörigen Sonnenstand entspricht, gespeichert werden. Dabei können zum Beispiel jeweils nur die absoluten Maximalwerte je Position erfasst werden. Es kann eine Matrix oder Speicherstruktur pro Messkanal vorgesehen sein. Die Messwerte können vor oder nach der Speicherung gefiltert und/oder geglättet werden.

Die gespeicherten Verhältnisse werden dadurch gebildet, dass für die Messwerte jedes Messkanals für jeden Sonnenstand das Verhältnis zu den Messwerten der anderen Messkanäle gebildet werden.

Zum Beispiel aus den Speicherstrukturen der Messwerte der Messkanäle können jetzt die Verhältnisse der Messwerte untereinander für alle Sonnenstände errechnet werden. Mit der Annahme, dass jeder Messkanal zum überwiegenden Teil unverschattet ist, kann durch Ermittlung der Häufigkeitsverteilung in der Verhältnisspeicherstruktur ein erwartetes Verhältnis ermittelt werden. Im ungestörten Fall, das heißt wenn keine Verschattung oder ähnliches vorliegt, ist das erwartete Verhältnis (relativ) konstant. Das erwartete Verhältnis kann als Extremwert der Häufigkeitsverteilung gewählt werden.

Die obigen Schritte werden vorzugsweise wiederkehrend ausgeführt, wobei Matrizen, Vektoren und/oder weitere Speicherstrukturen für die Messwerte gefüllt bzw. Maximal- oder Minimalwerte verglichen und gegebenenfalls ersetzt werden.

Nun wird das aktuelle Verhältnis aus aktuellen Messwerten berechnet und anschließend der aktuelle Messwert validiert. Die Validierung umfasst verschiedene Vergleiche. Dabei kann eine direkte Übereinstimmung oder Vergleich durchgeführt bzw. bewertet werden oder eine Abweichung um mehr als einen Grenzwert berücksichtigt werden.

Weicht der Wert eines Messkanals von den anderen Werten der Gruppe, das heißt den entsprechenden Werten der anderen Kanäle, ab oder signifikant ab, so könnte eine Fehlfunktion vorliegen. Ergibt sich nun aus dem Vergleich des häufigsten Verhältnisses dieses Messwerts mit dem für die momentane Sonnenposition gespeicherten, dass hier keine Abweichung erwartet werden konnte, so liegt ein Fehler oder eine Störung vor.

Wenn das erwartete Verhältnis vom gespeicherten Verhältnis abweicht, so wird die Validität für diesen Messwert nicht bewertet. Es braucht keine Prüfung zu erfolgen, da in diesem Fall eine Verschattung vorliegt.

Ein oder mehrere Messwerte können auf Plausibilität geprüft werden. Die Messwerte können vor oder auch während der Verarbeitung auf Plausibilität überprüft werden. Dazu können unter anderem die Signalmonotonie zur Erkennung von Messfehlern bewertet werden, bekannte Einflussfaktoren wie geplante Wartungen oder Vorgaben und/oder Auswirkungen des Netzmanagements, der aktuelle Fehlerstatus sowie historische Daten wie zum Beispiel frühere Messungen zum gleichen Sonnenstand berücksichtigt werden.

Die Messkanäle können Strängen einer Photovoltaikanlage zugeordnet sein und die Messwerte können aus Messungen von Strangströmen der Stränge resultieren. Bei Verschattungen oder Teilverschattungen von Photovoltaikanlagen ist für den Betreiber bzw. die Steuerung der Anlage häufig nicht ersichtlich ist, ob ein Fehler oder nur eine Verschattung vorliegt. In Folge wird eine Fehlermeldung erzeugt, von der der Betreiber nicht weiß, ob ihr ein wirklicher Fehler oder nur eine Verschattung zu Grunde liegt. Daher bietet sich das Verfahren für Photovoltaikanlagen an. Es können nicht nur einzelne Stränge sondern auch Zonen, Wechselrichter und Kraftwerksblöcke überwacht bzw. verarbeitet werden.

Eine Verschattung eines Strangs für einen bestimmten Sonnenstandsbereich kann vorliegen, wenn das gespeicherte Verhältnis für diesen Bereich vom erwarteten Verhältnis abweicht. Wenn eine Verschattung erkannt wird, kann eine von der Anlagen- oder Zustandssteuerung erzeugte Fehlermeldung unterdrückt werden oder es kann die Erzeugung und/oder Ausgabe einer Fehlermeldung unterdrückt oder verhindert werden.

Bei dem Verfahren werden Maximalwerte der Messwerte gespeichert. Dies ermöglicht ein Training oder Selbstlernen des Verfahrens, da so die gespeicherten Messwerte ständig mit den aktuellen verglichen werden und bei neuen Maximalwerten auch ersetzt das heißt angepasst werden.

Die Berechnung des aktuellen Verhältnisses kann einen Vergleich des aktuellen Messwerts mit einem Sollwert oder Schwellwert umfassen. Der Sollwert oder Schwellwert kann ein fixer Wert wie zum Beispiel ein bestimmter Stromwert in Ampere oder ein Grenzwert für einen Messwert des aktuellen und/oder anderer Messkanäle sein. Die Berechnung des aktuellen Verhältnisses kann einen oder mehrere derartige Vergleiche enthalten oder kann ausschließlich aus ihnen bestehen.

Zum Ermitteln des erwarteten Verhältnisses kann eine Auswahl der gespeicherten Werte als Stützstellen genutzt werden. So können zum Beispiel bereits mehrere Werte pro Sonnenstand für die einzelnen Messwerte gespeichert werden. Dies kann zur Abbildung komplexerer Abhängigkeiten der Messkanäle einer Gruppe untereinander genutzt werden. Der Begriff Gruppe umfasst mehrere gleichartige Messwerte.

Eingangsgrößen des Verfahrens können die Messwerte und die jeweiligen Zeitpunkte der Messung sein. Über den Zeitpunkt und den bekannten Ort bzw. die Geokoordinate des Messpunktes, wie zum Beispiel einem Solarpanel, einem Generatoranschlusskasten, einem Wechselrichter oder ähnlichem, kann der Sonnenstand abgeleitet oder berechnet werden. Der Sonnenstand oder die Sonnenposition wird üblicherweise in Elevation und Azimut angegeben.

Das erwartete Verhältnis könnte nicht ermittelt werden, wenn keine ausreichende Anzahl an gespeicherten Messwerten vorliegt. Bei noch nicht vollständig oder nur teilweise gefüllten Speicherstrukturen kann es sein, dass das Verfahren seine volle Leistungsfähigkeit noch nicht erreicht. Dann kann das Verfahren modifiziert verwendet werden, um echte Fehler nicht versehentlich als Verschattung zu kennzeichnen. Als Kriterium für die modifizierte Anwendung kann der Füllstand bzw. die Füllstände der Speicherstrukturen verwendet werden. Bei ungenügendem Füllstand kann das erwartete Verhältnis noch nicht ausgeprägt genug sein und der Vergleich könnte nicht durchgeführt werden.

In einem weiteren Aspekt ist die Erfindung auf ein Verfahren zum Betreiben eines Photovoltaik-Kraftwerks mit einer Fehlerüberwachung gerichtet, wobei mit dem oben beschriebenen Verfahren detektierte Fehler überprüft werden und Fehlermeldungen bei Vorliegen einer Verschattung unterdrückt werden. Es gelten die gleichen Vorteile und Modifikationen wie oben beschrieben.

Im Folgenden wird die Erfindung anhand der Zeichnungen näher beschrieben, es zeigen:
Figur 1 eine schematische Darstellung eines PV Kraftwerks gemäß der Erfindung.
Figur 2 eine schematische Darstellung eines ersten Schritts des Verfahrens gemäß der Erfindung.
Figur 3 eine schematische Darstellung eines zweiten Schritts des Verfahrens gemäß der Erfindung.
Figur 4 eine schematische Darstellung eines dritten Schritts des Verfahrens gemäß der Erfindung.
Figur 5 eine schematische Darstellung eines vierten Schritts des Verfahrens gemäß der Erfindung.
Figur 6 eine schematische Darstellung eines fünften Schritts des Verfahrens gemäß der Erfindung.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

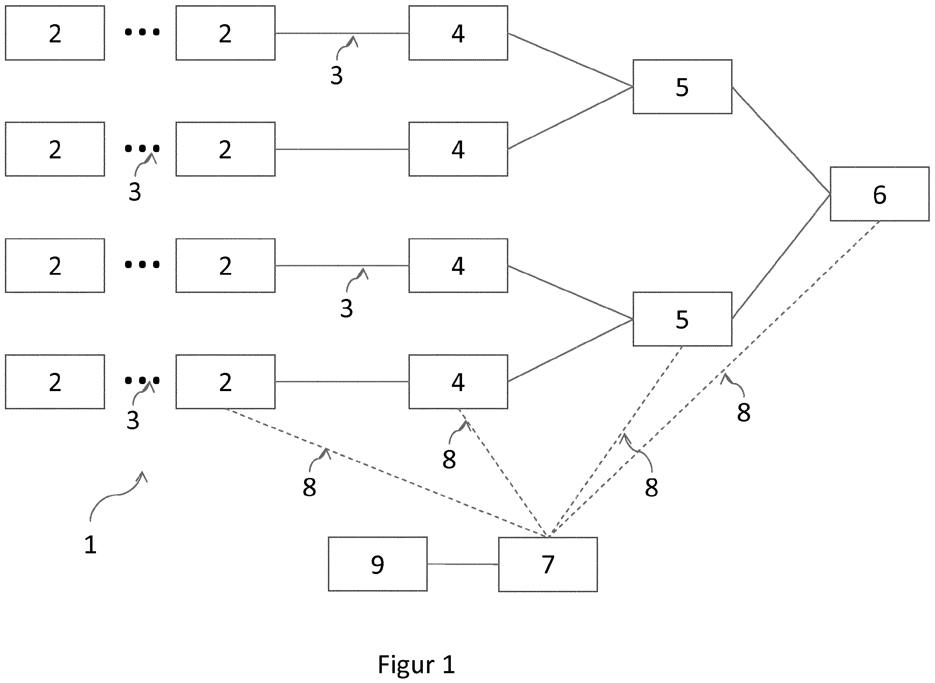

Figur 1 zeigt ein Photovoltaik-Kraftwerk 1 mit mehreren Solarmodulen 2. Die Solarmodule 2 sind in Strängen oder Strings 3 angeordnet. Dazu sind mehrere Solarmodule 2 hintereinander geschaltet. Mehrere Stränge 3 können logisch und/oder schaltungstechnisch zu Zonen zusammengefasst sein.

Jeder Strang 3 führt zu einem Generatoranschlusskasten 4 oder einem ähnlichen Anschlusspunkt für den Strang 3. Hier ist jedem Generatoranschlusskasten 4 ein Strang 3 zugeordnet, es können auch mehrere Stränge 3 an einem Generatoranschlusskasten 4 angeschlossen sein. Der Generatoranschlusskasten 4 muss keine eigenständige Einheit sein, sondern kann auch Bestandteil, wie zum Beispiel eine Platine, Baueinheit oder Softwareroutine für die Signalverarbeitung, einer anderen elektrischen und/oder elektronischen Einheit sein.

Die Generatoranschlusskästen 4 sind mit Wechselrichtern oder Stromrichtern 5 verbunden. Die Wechselrichter 5 richten den von den Solarmodulen 2 erzeugten Gleichstrom in Wechselstrom um. Hier sind zwei Generatoranschlusskästen 4 mit einem Wechselrichter 5 verbunden. Dieses Verhältnis kann je nach Anlage, verwendeten Komponenten usw. anders gewählt werden.

Die Wechselrichter 5 sind zu einem Kraftwerksblock 6 zusammengefasst und/oder sind an einen Netzübergabepunkt 6 angeschlossen. Der Netzübergabepunkt 6 ist ausgangsseitig mit dem Stromnetz oder Grid verbunden.

Die oben erläuterten Verbindungen zwischen den Solarmodulen 2, den Generatoranschlusskästen 4, den Wechselrichtern 5 und/oder dem Netzübergabepunkt 6 sind in erster Linie Verbindungen zur Übertragung von Energie. Darüber hinaus können über diese Verbindungen und/oder weitere Verbindungen Informationen übertragen werden. Diese Informationen können explizite Informationen wie zum Beispiel Steuerdaten, Betriebsdaten usw. oder implizite Informationen sein, die in der Energieübertragung enthalten sind und extrahiert werden.

Eine Steuer- oder Recheneinheit 7 nimmt Messwerte der Messkanäle 3 auf. Die Messwerte werden der Steuereinheit 7 über Signalleitungen 8 zugeführt. In Figur 1 sind mehrere Signalleitungen zu den Solarmodulen 2, den Generatoranschlusskästen 4, den Wechselrichtern 5 und dem Netzübergabepunkt 6 gezeigt. Weitere Signalleitungen zu den anderen Solarmodulen 2, den Generatoranschlusskästen 4 und dem Wechselrichter 5 sind aus Gründen der Übersichtlichkeit nicht dargestellt. Es kann auch lediglich ein einzelner Typ von Signalleitungen 8 zum Beispiel zu den Generatoranschlusskästen 4 verwendet werden.

Die Steuereinheit 7 verarbeitet bzw. validiert die Messwerte in Abhängigkeit vom Sonnenstand. Eine Kraftwerkssteuerung oder -regelung 9, welche Betriebsabläufe des Photovoltaik-Kraftwerks 1 überwacht und regelt steht in Verbindung mit der Steuereinheit 7, so dass Messwerte, Informationen, Ergebnisse und weitere Daten ausgetauscht werden können. Die Steuereinheit 7 kann als Bestandteil der Kraftwerkssteuerung 9 in Hardware und/oder Software ausgeführt sein.

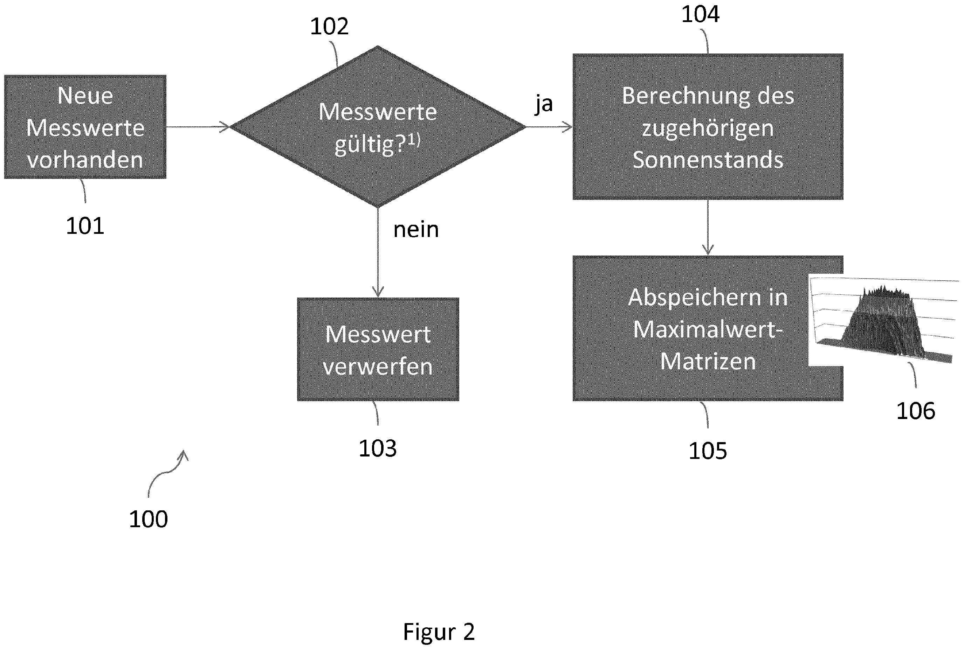

Anhand der Figuren 2 bis 6 wird im Folgenden ein Ablauf des Verfahrens zur Validierung von Messwerten bzw. zur (Zustands)Überwachung eines PV-Kraftwerks beschrieben.

Figur 2 zeigt einen ersten Schritt 100, in dem Messwerte der Messkanäle 3 unter Berücksichtigung des Sonnenstands gespeichert werden. Zunächst stehen in einem ersten Teilschritt 101 neue Messwerte zur Verfügung. Ist dies nicht der Fall, kann das Verfahren und/oder die nötige Hard- und Software in einem Standby-Betrieb sein. Im Schritt oder Block 102 wird optional die Validität oder Gültigkeit des oder der Messwerte geprüft. Ist der Messwert ungültig, zum Beispiel weil ein Messfehler detektiert wird oder eine Inplausiblität durch eine angemeldete Wartung vorliegt, wird der Messwert in einem Schritt 103 verworfen. Für eine spätere Bearbeitung, Dokumentation und/oder Auswertung kann der verworfene Messwert gesichert werden.

Ist der Messwert gültig oder plausibel, wird in einem Schritt 104 der zu dem Messwert gehörige Sonnenstand berechnet. Der Sonnenstand wird über den Zeitpunkt des Messwerts und den bekannten Ort des gemessenen Geräts oder Bereichs berechnet. Der Sonnenstand wird in Elevation und Azimut bestimmt.

In einem Schritt 105 wird der Messwert unter Berücksichtigung des Sonnenstands in einer Maximalwertmatrix 106 abgespeichert. Diese Matrix 106 speichert die Messwerte wie zum Beispiel Strangströme gemeinsam mit Orts- und/oder Datumsangaben oder -koordinaten. Es werden Messwerte für jeden Strang und für jede Sonnenposition oder jeden Sonnenstand gespeichert.

Es werden jeweils, das heißt für jedes Datenfeld der Matrix, Maximalwerte gespeichert. Für den gewählten Zeitzyklus, zum Beispiel Jahr, Monat, Woche oder Tag, wird ein neuer plausibler Messwert nur dann in der Matrix 106 gespeichert, wenn er einen höheren oder größeren Wert als der bereits für diesen Zeitpunkt bestehende Messwert aufweist. Die Auswahl der Maximalwerte bietet eine gute Korrelation mit der gewünschten Ertragsmaximierung der PV-Anlage 1.

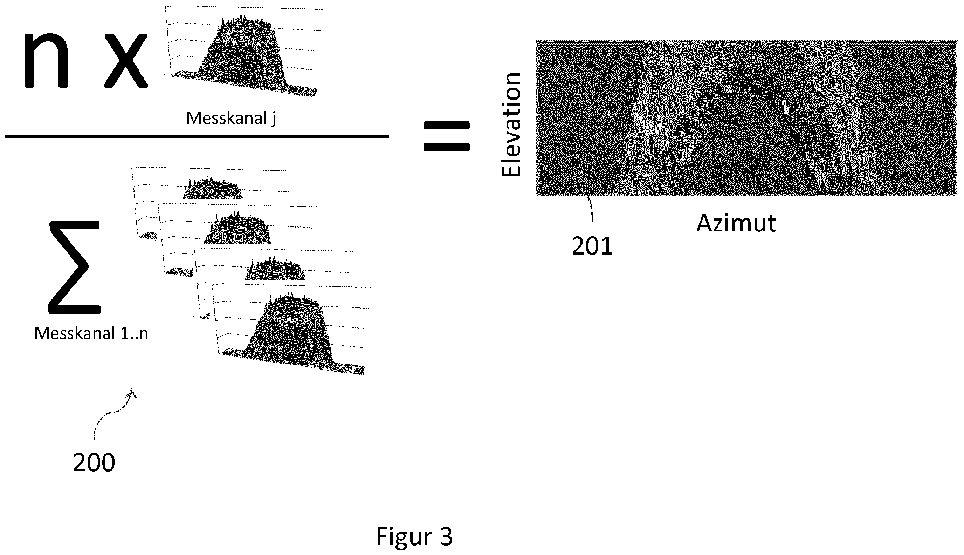

Figur 3 zeigt einen zweiten Schritt 200, in dem aus den im Schritt 100 gespeicherten Messwerten für alle Sonnenstände gespeicherte Verhältnisse berechnet und gespeichert werden. Dazu wird das n-fache jedes gespeicherten Messwertes eines Messkanals j durch die Summe der jeweiligen 1..n Messwerte aller zugehörigen Messkanäle 3 dividiert. Diese Berechnung wird für alle Messkanäle 3 durchgeführt. Das Ergebnis ist für jeden Messkanal 3 eine Verhältnismatrix 201, mit einer Dimension für den Messwert bzw. das Verhältnis, einer Dimension für die Elevation und einer Dimension für den Azimut. Man kann sagen, dass die Verhältnismatrix 201 Erfahrungswerte wiederspiegelt.

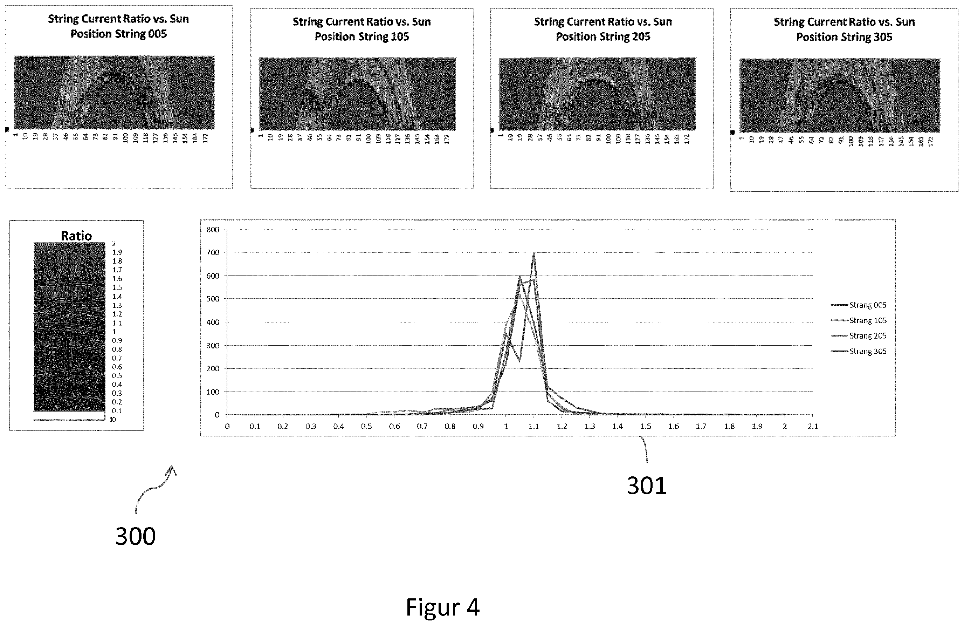

Figur 4 zeigt einen dritten Schritt 300 zum Ermitteln eines erwarteten Verhältnisses 301 durch Berechnung einer Häufigkeitsverteilung über alle gespeicherten Verhältnisse aus dem zweiten Schritt 200. Beispielhaft werden hier vier Stränge 005, 105, 205 und 305 betrachtet. Für jeden Strang 3 wird ein erwartetes Verhältnis 301 berechnet. Wie dargestellt, sind die Verhältnisse ähnlich bzw. in einer ähnlichen Größenordnung, wenn die Stränge unverschattet sind. Die Extremwerte der Häufigkeitsverteilungen sind die jeweils erwarteten Verhältnisse

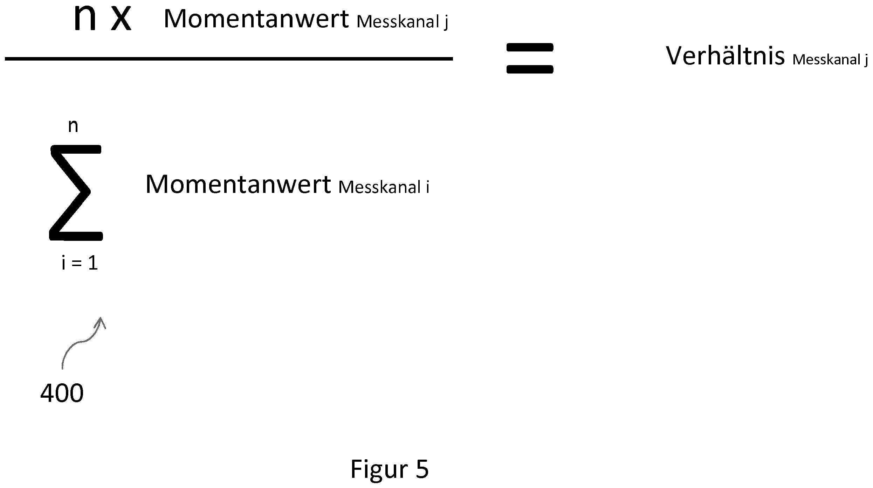

Figur 5 zeigt einen vierten Schritt 400 zum Berechnen eines aktuellen Verhältnisses eines aktuell gemessenen Messwertes oder Momentanwerts zu aktuellen Messwerten der anderen Messkanäle. Dazu wird ein aktuell gemessener Messwert oder ein Momentanwert des Messkanals j durch die Summe aller entsprechenden aktuellen Messwerte oder Momentanwerte dividiert.

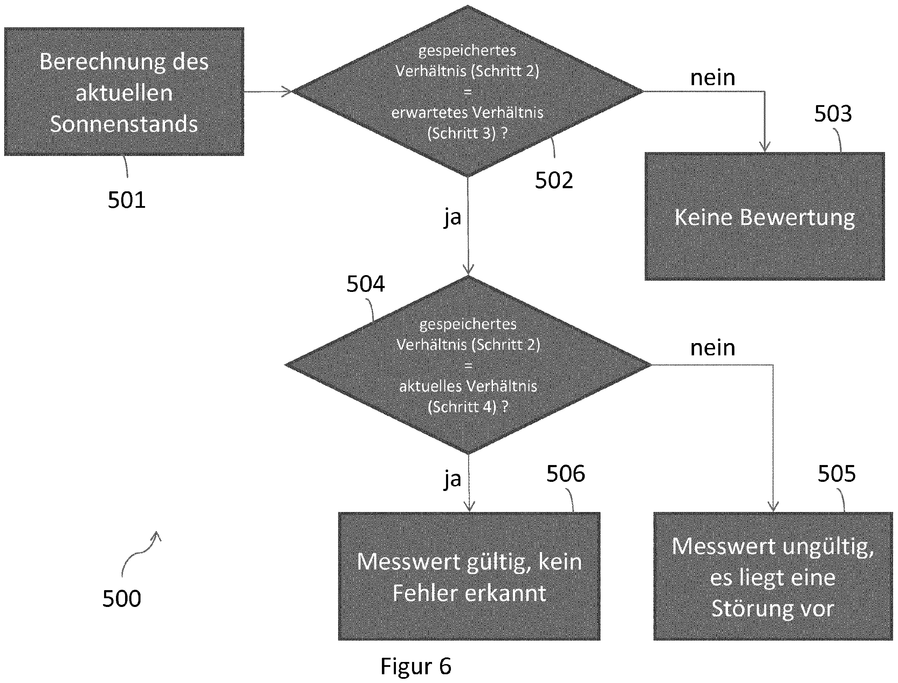

Figur 6 zeigt einen fünften Schritt 500 zum Validieren des aktuell gemessenen Messwertes. In den ersten vier Schritten 100, 200, 300 und 400 wird die Basis für den fünften Schritt 500 gelegt. Die dortigen Berechnungen können ständig bei neuen Messwerten bevorzugt im Hintergrund ablaufen. Im fünften Schritt wird der aktuelle Messwert verarbeitet bzw. validiert.

In einem ersten Teilschritt 501 wird der aktuelle Sonnenstand berechnet. Anschließend wird in einem Schritt 502 geprüft, ob das erwartete Verhältnis aus Schritt 300 vom gespeicherten Verhältnis aus Schritt 200 abweicht. Liegt keine Abweichung vor, so wird in einem Schritt 503 die Validität für diesen Messwert nicht bewertet. In diesem Fall liegt eine Verschattung vor und eine für diesen Verschattungsfall erzeugte Fehlermeldung der Kraftwerkssteuerung 9 kann unterdrückt und/oder modifiziert werden.

Liegt im Schritt 502 eine Abweichung vor, wird in einem Schritt 504 geprüft, ob das gespeicherte Verhältnis aus Schritt 200 dem aktuellen Verhältnis aus Schritt 400 entspricht. Ist dies nicht der Fall, liegt gemäß Schritt 505 eine Störung vor. Liegt keine Abweichung vor, so ist gemäß Schritt 505 der aktuelle Messwert gültig und valid.

Für das Vorliegen der Ergebnisse in den Schritten 505 und 506 werden beide Vergleiche 502 und 504 durchgeführt. Die beiden Vergleiche können gleichzeitig bzw. parallel oder in anderer Reihenfolge durchgeführt werden.

Das oben beschriebene Verfahren ist eine von mehreren Varianten. Einzelne Schritte wie zum Beispiel die Plausibilitätsprüfung sind optional. Auch die Reihenfolge der Schritte kann anders gewählt werden, wenn möglich können Schritte auch parallel durchgeführt werden oder ein Schritt implizit in einem anderen Schritt ausgeführt werden.

## Patentansprüche

1. Verfahren zur Validierung sonnenstandsabhängiger Messwerte mehrerer Messkanäle (3), mit den folgenden Schritten:
- Speichern (100) zumindest von Maximalwerten von Messwerten der Messkanäle (3) unter Berücksichtigung des zugehörigen Sonnenstands;
- Berechnen und Speichern (200) von gespeicherten Verhältnissen (201), derart, dass für die Messwerte jedes Messkanals für jeden Sonnenstand das Verhältnis zu den Messwerten der anderen Messkanäle (3) gebildet wird;
- Ermitteln (300) eines erwarteten Verhältnisses (301) durch Berechnung einer Häufigkeitsverteilung über alle gespeicherten Verhältnisse (201);
- Berechnen (400) eines aktuellen Verhältnisses eines aktuell gemessenen Messwertes zu aktuellen Messwerten der anderen Messkanäle (3); und
- Validieren (500) des aktuell gemessenen Messwertes:
- Wenn das erwartete Verhältnis (301) dem gespeicherten Verhältnis (201) entspricht und das gespeicherte Verhältnis (201) dem aktuellen Verhältnis entspricht, so ist der aktuelle Messwert gültig und valid (506); und/oder
- Wenn das erwartete Verhältnis (301) dem gespeicherten Verhältnis (201) entspricht und das gespeicherte Verhältnis (201) vom aktuellen Verhältnis abweicht, so liegt eine Störung vor (505); und/oder
- Wenn das erwartete Verhältnis (301) vom gespeicherten Verhältnis (201) abweicht, so wird die Validität für diesen Messwert nicht bewertet 503).

2. Verfahren nach Anspruch 1, wobei ein Messwert auf Plausibilität geprüft wird.

3. Verfahren nach Anspruch 1 oder 2, wobei die Messkanäle (3) Strängen einer Photovoltaikanlage (1) zugeordnet sind und die Messwerte aus Messungen von Strangströmen der Stränge (3) resultieren.

4. Verfahren nach Anspruch 3, wobei eine Verschattung eines Strangs (3) für einen bestimmten Sonnenstandsbereich vorliegt, wenn das gespeicherte Verhältnis (201) für diesen Bereich vom erwarteten Verhältnis (301) abweicht.

5. Verfahren nach mindestens einem der Ansprüche 1 bis 4, wobei die Berechnung des aktuellen Verhältnisses einen Vergleich des aktuellen Messwerts mit einem Sollwert oder Schwellwert umfasst.

6. Verfahren nach mindestens einem der Ansprüche 1 bis 5, wobei zum Ermitteln des erwarteten Verhältnisses eine Auswahl der gespeicherten Messwerte als Stützstellen genutzt werden.

7. Verfahren nach mindestens einem der Ansprüche 1 bis 6, wobei Eingangsgrößen die Messwerte und die jeweiligen Zeitpunkte der Messung sind.

8. Verfahren zum Betreiben eines Photovoltaik-Kraftwerks (1) mit einer Fehlerüberwachung, wobei mit dem Verfahren nach mindestens einem der Ansprüche 1 bis 7 detektierte Fehler überprüft werden und Fehlermeldungen bei Vorliegen einer Verschattung unterdrückt werden.

## Claims

1. A method for validating measurements of multiple measurement channels (3) which depend on the position of the sun, comprising the following steps:
- storage (100) of at least maximum values of measurements of the measurement channels (3) taking into consideration the associated position of the sun;
- calculation and storage (200) of stored ratios (201), in such a way that for the measurements of each measurement channel the ratio to the measurements of the other measurement channels (3) is formed for each position of the sun;
- determination (300) of an expected ratio (301) by calculation of a frequency distribution of all the stored ratios (201) ;
- calculation (400) of a current ratio of a currently measured measurement to current measurements of the other measurement channels (3); and
- validation (500) of the currently measured measurement:
- when the expected ratio (301) corresponds to the stored ratio (201) and the stored ratio (201) corresponds to the current ratio, then the current measurement is applicable and valid (506); and/or
- when the expected ratio (301) corresponds to the stored ratio (201) and the stored ratio (201) deviates from the current ratio, then a disturbance exists (505); and/or
- when the expected ratio (301) deviates from the stored ratio (201), then the validity for this measurement is not evaluated (503).

2. The method according to Claim 1, wherein a measurement is checked for plausibility.

3. The method according to Claim 1 or 2, wherein the measurement channels (3) are associated with strings of a photovoltaic installation (1) and the measurements result from measurements of string currents of the strings (3).

4. The method according to Claim 3, wherein a shading of a string (3) exists for a certain position of the sun, when the stored ratio (201) deviates for this area from the expected ratio (301).

5. The method according to at least one of Claims 1 to 4, wherein the calculation of the current ratio comprises a comparison of the current measurement with a target value or threshold value.

6. The method according to at least one of Claims 1 to 5, wherein for the determination of the expected ratio a selection of the stored measurements is used as support points.

7. The method according to at least one of Claims 1 to 6, wherein input variables are the measurements and the respective times of the measurement.

8. A method for operating a photovoltaic power plant (1) with error monitoring, wherein, by means of the method according to at least one of Claims 1 to 7, detected errors are checked and error messages are suppressed if shading is present.

## Revendications

1. Procédé de validation de valeurs de mesure en fonction de la position du soleil sur plusieurs canaux de mesure (3), avec les étapes suivantes :
- enregistrement (100) d'au moins des valeurs maximum de valeurs de mesure des canaux de mesure (3) en tenant compte de la position correspondante du soleil ;
- calcul et enregistrement (200) de rapports enregistrés (201) de sorte que le rapport aux valeurs de mesure des autres canaux de mesure (3) est formé pour les valeurs de mesure de chaque canal de mesure pour chaque position du soleil ;
- détermination (300) d'un rapport attendu (301) par calcul d'une distribution des fréquences de tous les rapports enregistrés (201) ;
- calcul (400) d'un rapport actuel d'une valeur de mesure actuellement mesurée par rapport à des valeurs de mesure actuelles des autres canaux de mesure (3) ; et
- validation (500) de la valeur de mesure actuellement mesurée :
- lorsque le rapport attendu (301) correspond au rapport enregistré (201) et le rapport enregistré (201) correspond au rapport actuel, la valeur de mesure actuelle est valable et valide (506) ; et/ou
- lorsque le rapport attendu (301) correspond au rapport enregistré (201) et le rapport enregistré (201) diverge du rapport actuel, il y a un dérangement (505) ; et/ou
- lorsque le rapport attendu (301) diverge du rapport enregistré (201), la validité pour cette valeur de mesure n'est pas évaluée (503).

2. Procédé selon la revendication 1, dans lequel la plausibilité d'une valeur de mesure est vérifiée.

3. Procédé selon la revendication 1 ou 2, dans lequel les canaux de mesure (3) sont associés à des chaînes d'une installation photovoltaïque (1) et les valeurs de mesure résultent de mesures de courants de chaîne des chaînes (3).

4. Procédé selon la revendication 3, dans lequel un ombrage d'une chaîne (3) est présent pour une plage de position de soleil donnée, lorsque le rapport enregistré (201) pour cette plage diverge du rapport attendu (301).

5. Procédé selon au moins une des revendications 1 à 4, dans lequel le calcul du rapport actuel comprend une comparaison de la valeur de mesure actuelle avec une valeur de consigne ou valeur seuil.

6. Procédé selon au moins une des revendications 1 à 5, dans lequel une sélection des valeurs de mesure enregistrées sont utilisées en tant que points d'appui pour la détermination du rapport attendu.

7. Procédé selon au moins une des revendications 1 à 6, dans lequel des grandeurs d'entrée sont les valeurs de mesure et les moments respectifs de la mesure.

8. Procédé de fonctionnement d'une centrale photovoltaïque (1) avec une surveillance des erreurs, dans lequel des erreurs détectées avec le procédé selon au moins une des revendications 1 à 7 sont vérifiées et des messages d'erreur sont supprimés en cas de présence d'un ombrage.
